# EUROPÄISCHE PATENTSCHRIFT

(11) **EP 3 326 853 B1**
(45) Veröffentlichungstag und Bekanntmachung des Hinweises auf die Patenterteilung: **29.04.2020**
(21) Anmeldenummer: 17155163.3
(22) Anmeldetag: 08.02.2017
(51) Int. Cl.: B60K 1/04, B62D 21/15, B62D 25/02, H01M 2/10, B60L 50/60

(54) **BATTERIE-HALTEANORDNUNG**
BATTERY HOLDER ASSEMBLY
SYSTÈME DE MAINTIEN DE BATTERIE

(30) Priorität: 23.11.2016 EP 16200192
(43) Veröffentlichungstag der Anmeldung: 30.05.2018
(73) Patentinhaber: MAGNA STEYR Fahrzeugtechnik AG & Co KG, 8041 Graz (AT)
(72) Erfinder: GOETTFRIED, Dietmar, 8071 Hausmannstätten (AT); MAIER, Stefan, 9473 Lavamünd (AT); NELL, Peter, 8010 Graz (AT); TAUCHER, Jürgen, 8261 Sinabelkirchen (AT)
(74) Vertreter: Zangger, Bernd

(56) Entgegenhaltungen:
- EP-A1- 2 562 020
- DE-A1-102012 108 816
- DE-T5-112007 000 474
- FR-A1- 2 994 895
- JP-A- H07 246 845
- JP-A- 2015 123 801
- JP-B2- 5 930 123

## Beschreibung

### Gebiet der Erfindung

Die vorliegende Erfindung betrifft eine Batterie-Halteanordnung für ein Fahrzeug.

### Stand der Technik

Insbesondere in Elektrofahrzeugen, wie z. B. einem hybridelektrischen Fahrzeug mit Verbrennungsmotor, einem Plug-in-Hybridfahrzeug bzw. Steckdosen-Hybridfahrzeug oder einem Elektro-Auto, werden größere Batterien als Antriebsbatterien eingesetzt, die eine große Anzahl von zum Beispiel Lithiumionen-Zellen oder Nickel-Wasserstoff-Zellen umfassen können.

Derartige Batterien sind typischerweise groß und schwer und verlangen daher eine geeignete Anordnung und Befestigung am Fahrzeug.

Zudem muss gerade bei solchen Hochvolt-Batterien sichergestellt werden, dass die Batterie, insbesondere ein Gehäuse der Batterie, auch bei einem Aufprall des Fahrzeugs nicht zerstört wird, so dass die Batteriezellen geschützt werden.

Es ist bekannt, dass solche Batterien an der Karosserie des Fahrzeuges verschraubt werden können.

Gerade bei einem Seitenaufprall eines Fahrzeuges mit einer derart befestigten Batterie können solche Schraubverbindungen jedoch versagen und die Batterie unkontrolliert verschoben werden oder sich ganz vom Fahrzeug lösen.

DE 10 2012 108 816 A1 beschreibt eine Batterietrageinrichtung für ein Fahrzeug die es ermöglicht, dass ein Batteriepaket bei einem Unfall in einer bestimmten Richtung bewegt wird. Die Batterietrageinrichtung weist folgendes auf:
- ein Batteriepaket, das unter Anordnung einer Sekundärbatterie in einem Gehäuse gebildet ist und in einem unteren Bereich einer Fahrzeugkarosserie angeordnet ist; und
- einen verformbaren Träger zum Tragen von einem Ende des Batteriepakets in der Fahrzeugbreitenrichtung,
- wobei der verformbare Träger sich in Reaktion auf eine Eingangsbelastung von dem einen Ende des Batteriepakets in der Fahrzeugbreitenrichtung verformt und dadurch das andere Ende des Batteriepakets dazu veranlaßt wird, sich in der Belastungseingangsrichtung zu bewegen und sich relativ zu der Fahrzeugkarosserie nach unten zu bewegen. So offenbart die FR 29 94 89 5 eine Vorrichtung mit den Merkmalen des Oberbegriffs von Anspruch 1. Das Dokument zeigt eine Vorrichtung, die eine Batterie in einem Unfallzustand vor dem Abfallen vom Fahrzeug schützt, und dazu Halteorgane nutzt. Diese Halteorgane sind zusätzliche Bauteile und indirekt mit dem Batteriegehäuse verbunden. Es erfolgt keine Deaktivierung eines Verbindungsmittels, das am selben Abschnitt des Batteriegehäuses vorgesehen wäre.

### Zusammenfassung der Erfindung

Es ist eine Aufgabe der Erfindung, eine Batterie-Halteanordnung für ein Fahrzeug anzugeben, die die Sicherheit der Batterie und eines damit ausgestatteten Fahrzeuges auf kostengünstige Weise deutlich erhöht.

Die Lösung der Aufgabe erfolgt durch die Merkmale des kennzeichnenden Teils von Anspruch 1. Eine Batterie-Halteanordnung für ein Fahrzeug, wird vorgeschlagen, umfassend zumindest ein Karosseriebauteil und eine Batterie, wobei das Karosseriebauteil zumindest einen Fortsatz umfasst, der als Fangnase für die Batterie wirkt, so dass die Batterie in einem Normalzustand des Fahrzeugs von dem Fortsatz nicht gehalten wird und in einem Schadenszustand des Fahrzeuges die Batterie vom Fortsatz gehalten wird.

Erfindungsgemäß wird eine Batterie, insbesondere Antriebsbatterie, eines Fahrzeuges an einem Karosseriebauteil des Fahrzeuges, insbesondere an einem seitlichen Schweller oder an einer sonstigen Längsstruktur des Fahrzeuges, in einem Schadenszustand von einem Fortsatz gehalten, der im Normalbetrieb des Fahrzeuges nicht der Befestigung der Batterie dient. Bei einem Unfall, insbesondere bei einem seitlichen Aufprall, beispielsweise Aufprall auf einen Pfahl, werden die Geometrien, bevorzugt durch Nutzung der beim Aufprall auftretenden mechanischen Kräfte, derart geändert, dass der Fortsatz und die Batterie miteinander soweit in Kontakt treten, dass die Batterie vom Fortsatz zumindest in einer Raumrichtung gehalten wird. Es kommt bevorzugt zu einem Formschluss zwischen dem Rohbau bzw. der Karosserie einerseits und der Batterie andererseits, so dass ein Ablösen oder Separieren der Batterie vom Fahrzeug verhindert wird. Ein sich im Falle eines Unfalles/Aufpralles frei bewegendes Batteriepaket könnte andernfalls ein Risiko für andere Verkehrsteilnehmer darstellen.

Das Karosseriebauteil kann insbesondere ein Schweller sein.

Die Batterie kann insbesondere eine Antriebsbatterie sein, also insbesondere eine Hochvoltbatterie, und kann mehrere oder viele Zellen umfassen sowie ein Batteriegehäuse. Als Batterie wird vorzugsweise eine elektrische Batterie verstanden, der Begriff kann aber auch andere Energiequellen umfassen, die der Lieferung von Energie in einem Fahrzeug dienen.

Das Karosseriebauteil kann den Fortsatz einstückig ausbilden. Der Fortsatz kann auch als Zusatzbauteil am Karosseriebauteil befestigt sein.

Die Batterie wird im Normalzustand des Fahrzeugs von dem Fortsatz nicht gehalten und durch den Fortsatz bevorzugt auch nicht berührt. Im Schadenszustand des Fahrzeuges wird die Batterie vom Fortsatz gehalten und daher bevorzugt auch vom Fortsatz berührt.

Bevorzugt ist der Fortsatz vertikal unterhalb der Batterie ausgebildet. Besonders bevorzugt bildet der Fortsatz eine horizontal ausgerichtete Halteebene, so dass im Schadenszustand die Batterie vom Fortsatz entgegen der Schwerkraft gehalten wird. Die Halteebene ist dann etwa parallel zur Fahrbahn ausgerichtet bzw. normal auf die Z-Richtung des Fahrzeuges.

Die Batterie kann dann im Normalzustand an einer Befestigungsfläche des Karosseriebauteils befestigt sein, wobei die Befestigungsfläche parallel zur Halteebene des Fortsatzes ausgerichtet sein kann. Die Befestigungsfläche kann, zur einfachen Montage der Batterie durch Einschieben von unten, von unten frei zugänglich sein. Der Fortsatz ist dann bevorzugt durch einen Freigang, also einen seitlichen Abstand, von der montierten Batterie getrennt.

Vorzugsweise bildet der Fortsatz eine Seite einer Haltebucht. Die Batterie ist im Normalzustand bevorzugt nicht in der Haltebucht gehalten und im Schadenszustand in der Haltebucht gehalten. Eine Haltebucht weist eine dreiseitige Begrenzung auf. Bevorzugt werden alle drei Begrenzungen der Haltebucht vom Karosseriebauteil ausgebildet. Eine der drei Begrenzungen der Haltebucht kann dann der Fortsatz des Karosseriebauteils sein. Diese Begrenzung der Haltebucht kann dann die horizontale Haltebene sein. Eine weitere, dazu parallele Begrenzung der Haltebucht, kann die Befestigungsfläche sein oder eine Fläche die eine Verlängerung oder eine Parallele zur Befestigungsfläche ist. Die Halteebene und die Befestigungsfläche können durch eine seitliche Verbindungsfläche zur Haltebucht ergänzt sein.

Die Batterie-Halteanordnung umfasst ein Verbindungsmittel, nämlich eine Schraube, wobei die Batterie im Normalzustand durch das Verbindungsmittel am Karosseriebauteil befestigt ist und wobei im Schadenszustand das Verbindungsmittel deaktiviert, insbesondere gebrochen, zerstört oder geöffnet wird, sodass die Batterie und der Fortsatz bzw. gegebenenfalls die Haltebucht aufeinander zu bewegt werden, so dass die Batterie anschließend durch den Fortsatz, der als Fangnase wirkt, gehalten wird.

Der Fortsatz und/oder gegebenenfalls die Haltebucht sind bevorzugt im Normalzustand fahrzeugaußenseitig zur Batterie angeordnet, so dass im Schadenszustand, wenn das Karosseriebauteil nach innen, also näher zur Fahrzeuglängsmittelachse, gebogen wird, sich der Fortsatz und/oder die ganze Haltebucht von außen an die Batterie annähert, um die Batterie zu halten.

Die Batterie weist einen seitlichen Tragabschnitt auf, der in einem Schadenszustand des Fahrzeuges vom Fortsatz gehalten wird. Bevorzugt ist dieser Tragabschnitt im Normalzustand über das Verbindungsmittel am Karosseriebauteil befestigt.

Ein erfindungsgemäßes Fahrzeug umfasst eine Batterie-Halteanordnung wie oben beschrieben. Die Batterie-Halteanordnung ist bevorzugt so im Fahrzeug eingebaut, dass der Fortsatz im Schadenszustand die Batterie gegen ein Ablösen und Fallen der Batterie nach unten sichert.

### Kurzbeschreibung der Zeichnungen

Die Erfindung wird im Folgenden beispielhaft unter Bezugnahme auf die Zeichnungen beschrieben.
- Fig.: ist eine Schnittansicht einer erfindungsgemäßen Batterie-Halteanordnung im Normalzustand.

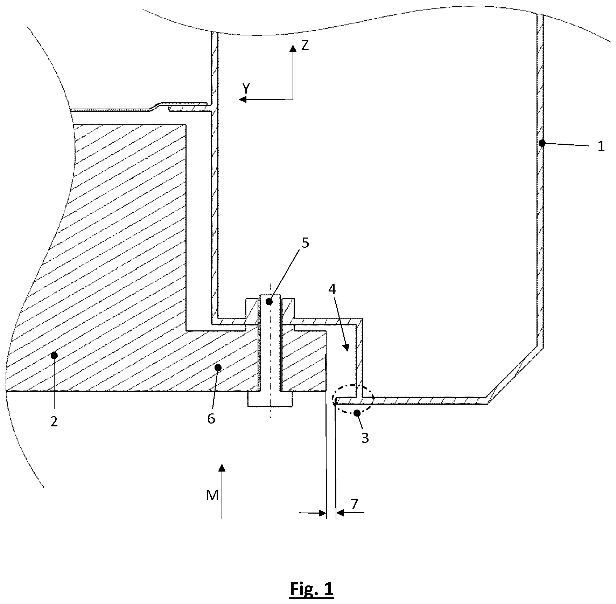

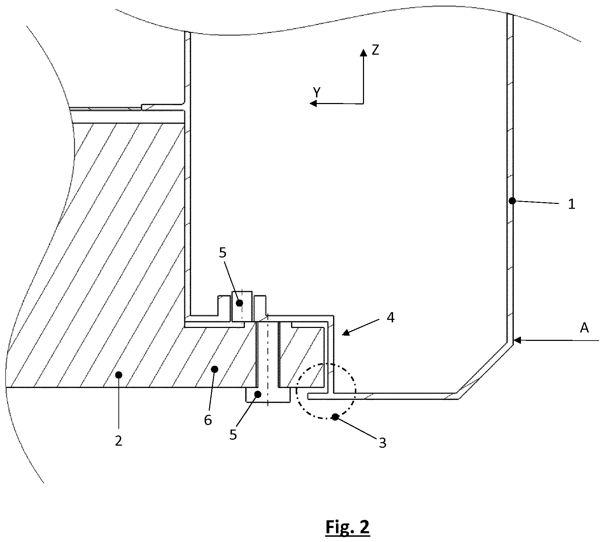

- Fig. 2: ist eine Schnittansicht der erfindungsgemäßen Batterie-Halteanordnung gemäß Fig. 1 im Schadenszustand.

### Detaillierte Beschreibung der Erfindung

In den Fig. 1 und 2 ist eine erfindungsgemäße Batterie-Halteanordnung dargestellt, wobei eine Fangnase 3 im Normalzustand, wie in Fig. 1 dargestellt ist, die Batterie 2 nicht haltet und im Schadenszustand, wie in Fig. 2 dargestellt ist, die Batterie 2 in Einbaurichtung unten haltet, so dass die Batterie 2 trotz Zerbrechens des Verbindungsmittels 5 nicht nach unten fällt.

Die Batterie-Halteanordnung umfasst ein Karosseriebauteil 1, nämlich einen seitlichen Schweller und eine Batterie 2, nämlich eine Antriebsbatterie in ihrem Batteriegehäuse. Das Karosseriebauteil 1 umfasst einen Fortsatz 3, der als Fangnase für die Batterie 2 wirkt, so dass die Batterie 2 in einem Normalzustand des Fahrzeugs - wie in Fig. 1 dargestellt - von dem Fortsatz 3 nicht gehalten wird und in einem Schadenszustand des Fahrzeuges - sie in Fig. 2 dargestellt - die Batterie 2 vom Fortsatz 3 gehalten wird.

Der Fortsatz 3 ist vertikal, also in Z-Richtung des Fahrzeuges, unterhalb der Batterie 2 ausgebildet, und seitlich im Normalzustand durch einen Freigang 7, als seitlichem Abstand gegenüber der Batterie 2, getrennt, wodurch eine einfache Montage der Batterie 2 in Montagerichtung M, nämlich von unten, ermöglicht wird.

Der Fortsatz 3 bildet eine horizontal ausgerichtete Halteebene aus, so dass im Schadenszustand die Batterie 2 vom Fortsatz 3 entgegen der Schwerkraft gehalten wird, so dass verhindert wird dass die Batterie 2 nach unten fällt.

Der Fortsatz 3 bildet eine Seite einer dreiseitigen Haltebucht 4 aus, die im Schadenszustand einen Tragabschnitt 6 der Batterie 2, der ein Abschnitt des Batteriegehäuses der Batterie 2 sein kann, umgibt und hält, so dass Bewegungen der Batterie 2 in Richtung nach unten, nach oben und nach außen formschlüssig verhindert werden.

Alle drei Seiten der Haltebucht werden in der dargestellten Ausführungsform von dem selben Karosseriebauteil 1, nämlich Schweller, ausgebildet.

Die Batterie 2, bevorzugt der Tragabschnitt 6 der Batterie 2, ist im Normalzustand über das Verbindungsmittel 5 am Karosseriebauteil 1, insbesondere an einer Seite bzw. einer Verlängerung der Haltebucht 4 befestigt.

Bei einem seitlichen Aufprall des Fahrzeuges - also von außen, in den dargestellten Figuren von rechts, in Aufprallrichtung A - wird das Karosseriebauteil 1 nach innen gedrückt und somit das Karosseriebauteil 1 und der Fortsatz 3 bzw. die Haltebucht 4 näher zur Batterie 2 geschoben. Dadurch kann das Verbindungsmittel 5, insbesondere eine Schraube, durch die auftretende Aufprallenergie zerbrochen und somit als Verbindungsmittel deaktiviert werden. Wie in Fig. 2 ersichtlich, wird die Batterie dabei jedoch trotz Bruch der Schraube vom Fortsatz 3 gehalten.

### Bezugszeichenliste

- 1: Karosseriebauteil
- 2: Batterie
- 3: Fortsatz
- 4: Haltebucht
- 5: Verbindungsmittel
- 6: Tragabschnitt
- 7: Freigang

- Z: Z-Richtung, vertikal
- Y: Y-Richtung, horizontal
- M: Montagerichtung
- A: Aufprallrichtung

## Patentansprüche

1. Batterie-Halteanordnung für ein Fahrzeug, umfassend zumindest ein Karosseriebauteil (1) und eine Batterie (2), wobei das Karosseriebauteil (1) zumindest einen Fortsatz (3) umfasst, der als Fangnase für die Batterie (2) wirkt, so dass die Batterie (2) in einem Normalzustand des Fahrzeugs von dem Fortsatz (3) nicht gehalten wird und in einem Schadenszustand des Fahrzeuges die Batterie (2) vom Fortsatz (3) gehalten wird, **dadurch gekennzeichnet, dass** die Batterie (2) einen seitlichen Tragabschnitt (6) aufweist, der in einem Schadenszustand des Fahrzeuges vom Fortsatz (3) gehalten wird, wobei der Tragabschnitt (6) der Batterie (2) ein Abschnitt des Batteriegehäuses der Batterie (2) ist, wobei die Batterie-Halteanordnung ein Verbindungsmittel (5) umfasst, nämlich eine Schraube, wobei der Tragabschnitt (6) der Batterie (2) im Normalzustand durch das Verbindungsmittel (5) am Karosseriebauteil (1) befestigt ist und wobei im Schadenszustand das Verbindungsmittel (5) deaktiviert wird, sodass die Batterie (2) und der Fortsatz (3) aufeinander zu bewegt werden.

2. Batterie-Halteanordnung nach Anspruch 1, wobei der Fortsatz (3) eine Seite einer Haltebucht (4) bildet, wobei die Batterie (2) im Normalzustand nicht in der Haltebucht (4) gehalten ist und im Schadenszustand in der Haltebucht (4) gehalten ist.

3. Batterie-Halteanordnung nach einem der zuvor genannten Ansprüche, wobei der Fortsatz (3) und/oder gegebenenfalls die Haltebucht (4) im Normalzustand fahrzeugaußenseitig zur Batterie (2) angeordnet sind, so dass im Schadenszustand, wenn das Karosseriebauteil (1) nach innen, also näher zur Fahrzeuglängsmittelachse, gebogen wird, sich der Fortsatz (3) und/oder die Haltebucht (4) von außen an die Batterie (2) annähert.

4. Batterie-Halteanordnung nach einem der zuvor genannten Ansprüche, wobei der Fortsatz (3) vertikal unterhalb der Batterie (2) ausgebildet ist, und bevorzugt eine horizontal ausgerichtete Halteebene bildet, so dass im Schadenszustand die Batterie (2) vom Fortsatz (3) entgegen der Schwerkraft gehalten wird.

5. Fahrzeug umfassend eine Batterie-Halteanordnung nach einem der zuvor genannten Ansprüche.

## Claims

1. Battery holder assembly for a vehicle, comprising at least one bodywork component (1) and a battery (2), **characterized in that** the bodywork component (1) comprises at least one projection (3) which acts as a catch for the battery (2), so that in a normal state of the vehicle the battery (2) is not held by the projection (3) and in a damaged state of the vehicle the battery (2) is held by the projection (3), **characterized in that** the battery (2) comprises a lateral support portion (6) which in a damaged state of the vehicle is held by the projection (3), wherein the support portion (6) of the battery (2) is a portion of the battery housing of the battery (2), wherein the battery holder arrangement comprises a connecting means (5), namely a screw, wherein in the normal state the support portion (6) of the battery (2) is fastened by the connecting means (5) to the bodywork component (1) and wherein in the damaged state the connecting means (5) is deactivated, so that the battery (2) and the projection (3) are moved toward one another.

2. Battery holder assembly according to Claim 1, wherein the projection (3) forms one side of a holding recess (4), wherein in the normal state the battery (2) is not held in the holding recess (4) and in the damaged state the battery is held in the holding recess (4).

3. Battery holder assembly according to one of the aforementioned claims, wherein in the normal state the projection (3) and/or optionally the holding recess (4) are arranged on the outside of the vehicle relative to the battery (2), so that in the damaged state when the bodywork component (1) is bent inwardly, i.e. closer to the vehicle longitudinal central axis, the projection (3) and/or the holding recess (4) is moved from the outside closer to the battery (2).

4. Battery holder assembly according to one of the aforementioned claims, wherein the projection (3) is configured vertically below the battery (2) and preferably forms a horizontally aligned holding plane so that in the damaged state the battery (2) is held by the projection (3) counter to the force of gravity.

5. Vehicle comprising a battery holder assembly according to one of the aforementioned claims.

## Revendications

1. Système de maintien de batterie pour un véhicule, comprenant au moins un composant de carrosserie (1) et une batterie (2), le composant de carrosserie (1) comprenant au moins une partie saillante (3) qui agit en tant que nez d'accrochage pour la batterie (2), de telle sorte que la batterie (2), dans un état normal du véhicule, ne soit pas maintenue par la partie saillante (3) et que la batterie (2) soit maintenue par la partie saillante (3) dans un état endommagé du véhicule, **caractérisé en ce que** la batterie (2) présente une portion de support latérale (6) qui est maintenue par la partie saillante (3) dans un état endommagé du véhicule, la portion de support (6) de la batterie (2) étant une portion du boîtier de batterie de la batterie (2), le système de maintien de batterie comprenant un moyen de connexion (5), à savoir une vis, la portion de support (6) de la batterie (2), dans l'état normal, étant fixée par le moyen de connexion (5) au composant de carrosserie (1) et, dans l'état endommagé, le moyen de connexion (5) étant désactivé de telle sorte que la batterie (2) et la partie saillante (3) soient déplacées l'une vers l'autre.

2. Système de maintien de batterie selon la revendication 1, dans lequel la partie saillante (3) forme un côté d'une anse de maintien (4), la batterie (2), dans l'état normal, n'étant pas maintenue dans l'anse de maintien (4), et, dans l'état endommagé, étant maintenue dans l'anse de maintien (4).

3. Système de maintien de batterie selon l'une quelconque des revendications précédentes, dans lequel la partie saillante (3) et/ou éventuellement l'anse de maintien (4), sont disposées dans l'état normal du côté extérieur du véhicule par rapport à la batterie (2), de telle sorte que dans l'état endommagé, lorsque le composant de carrosserie (1) est courbé vers l'intérieur, c'est-à-dire plus près de l'axe médian longitudinal du véhicule, la partie saillante (3) et/ou l'anse de maintien (4) se rapprochent depuis l'extérieur de la batterie (2).

4. Système de maintien de batterie selon l'une quelconque des revendications précédentes, dans lequel la partie saillante (3) est réalisée verticalement en dessous de la batterie (2) et forme de préférence un plan de maintien orienté horizontalement de telle sorte que dans l'état endommagé, la batterie (2) soit maintenue par la partie saillante (3) à l'encontre de la force de pesanteur.

5. Véhicule comprenant un système de maintien de batterie selon l'une quelconque des revendications précédentes.
